# EUROPÄISCHE PATENTANMELDUNG

(11) **EP 4 261 912 A1**
(43) Veröffentlichungstag der Anmeldung: **18.10.2023**
(21) Anmeldenummer: 22168270.1
(22) Anmeldetag: 13.04.2022
(51) Int. Cl.: H01M 4/04, H01M 10/0525, H01M 4/02

(54) **VERFAHREN ZUR HERSTELLUNG EINER ELEKTRODE SOWIE ZUGEHÖRIGE ELEKTRODE FÜR EINEN ENERGIESPEICHER**

(71) Anmelder: Blackstone Technology Holding AG, 6340 Baar (CH)
(72) Erfinder: Flaschenträger, David, 6006 Luzern (CH); Gritzka, Holger, 01900 Grossröhrsdorf (DE); Fiedler, Andy, 01169 Dresden (DE)
(74) Vertreter: Herrmann, Johanna

(57) **Zusammenfassung**

Ein Verfahren zur Herstellung einer Elektrode (1) für einen Energiespeicher mittels eines Siebdruckverfahrens umfasst mindestens zwei aufeinanderfolgende Druckschritte. In einem ersten Druckschritt wird ein erster Anteil einer Elektrodenpaste (9) auf ein Substrat (3) aufgetragen. Anschliessend wird mittels einer Pressvorrichtung (2) eine Druckkraft auf den ersten Anteil der Elektrodenpaste (9) aufgebracht, um den ersten Anteil der Elektrodenpaste zu verdichten, sodass ein verdichteter erster Anteil der Elektrodenpaste als eine erste Teilschicht (11) erhalten wird. In einem zweiten Druckschritt wird ein zweiter Anteil der Elektrodenpaste auf die erste Teilschicht (11) aufgetragen, wobei anschliessend eine Druckkraft auf den zweiten Anteil der Elektrodenpaste aufgebracht wird, um den zweiten Anteil der Elektrodenpaste zu verdichten, sodass ein verdichteter zweiter Anteil der Elektrodenpaste als eine zweite Teilschicht (12) erhalten wird.

## Beschreibung

### Hintergrund

Die vorliegende Erfindung betrifft ein Verfahren zur Herstellung einer Elektrode sowie eine zugehörige Elektrode für einen Energiespeicher. Insbesondere betrifft die Erfindung Verfahren zur Herstellung einer Elektrode sowie eine zugehörige Elektrode, welche mittels eines Siebdruckverfahrens hergestellt sind. Der Energiespeicher ist insbesondere als Li-Ionen Energiespeicher ausgebildet.

### Stand der Technik

Eine elektrochemische Zelle umfasst eine Kathode, also eine positive Elektrode, eine Anode, also eine negative Elektrode, einen Separator, der die positive Elektrode von der negativen Elektrode trennt, sowie ein Gehäuse, welches die positive Elektrode, die negative Elektrode, den Separator und einen Elektrolyten aufnimmt, in welchem die vorgenannte positive Elektrode, die negative Elektrode und der Separator zumindest teilweise aufgenommen sind. Die Anode und Kathode können über Kontakte einen Stromkreis mit einem Verbraucher ausbilden.

Eine elektrochemische Zelle kann für eine Primärbatterie oder eine Sekundärbatterie zum Einsatz kommen. Als Primärbatterie wird in der Folge eine Batterie bezeichnet, die nicht wiederaufladbar ist, das heisst, für den einmaligen Gebrauch bestimmt ist. Als Sekundärbatterie wird in der Folge eine Batterie bezeichnet, die wiederaufladbar ist: Oftmals wird für diesen Typ Energiespeicher auch der Begriff Akkumulator verwendet.

Sekundärbatterien sind bereits seit Jahrzehnten in verschiedensten Anwendungen im Einsatz, für deren elektrochemische Zellen können unterschiedlichste Materialien zum Einsatz kommen. Die Verwendungen für Sekundärbatterien nehmen zu, sie kommen beispielsweise in tragbaren elektronischen Geräten, in medizintechnischen Geräten, im Transportwesen, als Notstromaggregat, als Speicher zum Ausgleich von Schwankungen in der Stromversorgung, als Speichersystem für erneuerbare Energien.

Für Energiespeicher spielen neben den Kosten die Grösse und das Gewicht dieser Energiespeicher eine wichtige Rolle.

Damit Kathode und Anode nicht direkt miteinander in elektrischen Kontakt kommen, wird ein Separator zwischen jeder Kathode und Anode vorgesehen. Gemäss einer Verfahrensvariante kann eine der Elektroden in eine Separatortasche gesteckt werden. Der Separator kann als ein blattförmiges, mikroporöses Trennelement ausgebildet sein, welches für den Elektrolyten, Elektronen oder Ionen durchlässig ist, aber nicht für die Partikel der entsprechenden positiven oder negativen pastenförmigen aktiven Masse.

Kathoden, Separatoren und Anoden werden zu einem Zellstapel gebündelt, welcher die Primärzelle bildet. Der Zellstapel enthält üblicherweise 6 Kathoden, 6 Anoden die abwechselnd zueinander angeordnet sind, sowie die entsprechende Anzahl Separatoren, die sich zwischen je zwei benachbarten Kathoden und Anoden befinden. In einem nachfolgenden Verfahrensschritt werden die Kathoden elektrisch leitend miteinander verbunden, sodass bei Anlegen einer elektrischen Spannung ein Strom zu den Kathoden fliessen kann oder von den Kathoden abfliessen kann. In gleicher Weise werden die Anoden elektrisch leitend miteinander verbunden, sodass bei Anlegen einer elektrischen Spannung ein Strom zu den Anoden fliessen kann oder von den Anoden abfliessen kann.

Ein Akkumulator enthält eine Mehrzahl von Zellstapeln. Die Zellstapel werden in ein Kunststoffgehäuse gestellt, welches zur Aufnahme des Elektrolyten bestimmt ist. Benachbarte Zellstapel sind durch Gehäusezwischenwände voneinander getrennt. Die Kontakte der Kathoden und Anoden jeweils benachbarter Zellstapel werden miteinander üblicherweise mittels eines Schweissverfahrens verbunden. Das Gehäuse wird danach mittels eines Deckels verschlossen. Der Deckel enthält Öffnungen für die positiven und negativen Kontaktpole sowie Öffnungen zur Zufuhr des flüssigen Elektrolyten. Die Kontaktpole werden nach der Montage des Deckels angegossen. Der Deckel ist üblicherweise nicht abnehmbar, daher wird jedem Zellstapel der Elektrolyt durch die hierfür vorgesehenen Öffnungen zugeführt, die nach Abschluss der Befüllung ebenfalls verschlossen werden. Erst in diesem Zustand kann ein initialer Ladezyklus (Formation) durchgeführt werden. Nach Abschluss des Ladezyklus ist der Akkumulator bereit für den Einsatz.

Das beschriebene Herstellungsverfahren ist in der Praxis sehr kompliziert, da es sehr viele Prozessschritte umfasst, die teilweise diskontinuierlich ablaufen, beispielsweise die Trocknung der aktiven Masse, die in Trockenschränken erfolgt und bis zu 48h in Anspruch nehmen kann. Demzufolge dürfte die Durchlaufzeit, die zur Herstellung eines derartigen Akkumulators erforderlich ist, immer noch einige Tage betragen.

Es besteht daher Bedarf an einer Elektrode, die einfacher und kostengünstiger hergestellt werden kann.

### Aufgabe der Erfindung

Es ist Aufgabe der Erfindung, eine Elektrode für einen Energiespeicher mit einer Porositätsverteilung bereitzustellen, deren Elektrodenmaterial genau auf die erforderliche Menge an Elektrolyten abgestimmt ist.

### Beschreibung der Erfindung

Die Lösung der Aufgabe der Erfindung erfolgt durch ein Verfahren zur Herstellung einer Elektrode gemäss Anspruch 1. Vorteilhafte Ausführungsbeispiele des Verfahrens sind Gegenstand der Ansprüche 2 bis 8. Eine Elektrode, die mittels des erfindungsgemässen Verfahrens hergestellt ist, ist Gegenstand von Anspruch 9. Ein Energiespeicher, welcher eine Elektrode nach einem der vorhergehenden Ansprüche enthält, ist Gegenstand der Ansprüche 10 bis 12.

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die nachfolgende detaillierte Beschreibung enthält verschiedene Ausführungsbeispiele für das erfindungsgemässe Verfahren sowie die erfindungsgemässe Elektrode. Die Beschreibung einer bestimmten Elektrode ist nur als beispielhaft anzusehen. In der Beschreibung und den Ansprüchen werden die Begriffe "enthalten", "umfassen", "aufweisen" als "enthalten, aber nicht beschränkt auf" interpretiert.

Verfahren zur Herstellung einer Elektrode für einen Energiespeicher mittels eines Siebdruckverfahrens umfasst mindestens zwei aufeinanderfolgende Druckschritte, wobei in einem ersten Druckschritt ein erster Anteil einer Elektrodenpaste auf ein Substrat aufgetragen wird, wobei anschliessend mittels einer Pressvorrichtung eine Druckkraft auf den ersten Anteil der Elektrodenpaste aufgebracht wird, um den ersten Anteil der Elektrodenpaste zu verdichten, sodass ein verdichteter erster Anteil der Elektrodenpaste als eine erste Teilschicht erhalten wird, wobei in einem zweiten Druckschritt ein zweiter Anteil der Elektrodenpaste auf die erste Teilschicht aufgetragen wird, wobei anschliessend eine Druckkraft auf den zweiten Anteil der Elektrodenpaste aufgebracht wird, um den zweiten Anteil der Elektrodenpaste zu verdichten, sodass ein verdichteter zweiter Anteil der Elektrodenpaste als eine zweite Teilschicht erhalten wird.

Insbesondere ist die Druckkraft zur Herstellung des verdichteten zweiten Anteils der Elektrodenpaste kleiner als die Druckkraft zur Herstellung des verdichteten ersten Anteils der Elektrodenpaste. Insbesondere weist der verdichtete erste Anteil der Elektrodenpaste eine kleinere Porosität auf als der verdichtete zweite Anteil der Elektrodenpaste. Mit anderen Worten weist gemäss dieses Ausführungsbeispiels die erste Teilschicht eine kleinere Porosität als die zweite Teilschicht auf.

Gemäss eines Ausführungsbeispiels wird in einem dritten Druckschritt ein dritter Anteil der Elektrodenpaste auf den verdichteten zweiten Anteil der Elektrodenpaste aufgetragen, wobei anschliessend eine Druckkraft auf den dritten Anteil der Elektrodenpaste aufgebracht wird, um den dritten Anteil der Elektrodenpaste zu verdichten, sodass ein verdichteter dritter Anteil der Elektrodenpaste als eine dritte Teilschicht erhalten wird.

Insbesondere weist der verdichtete zweite Anteil der Elektrodenpaste eine kleinere Porosität auf als der verdichtete dritte Anteil der Elektrodenpaste. Mit anderen Worten weist gemäss dieses Ausführungsbeispiels die zweite Teilschicht eine kleinere Porosität als die dritte Teilschicht auf.

Insbesondere kann die Porosität der ersten Teilschicht im Bereich von 10 bis einschliesslich 70 % liegen.

Gemäss eines Ausführungsbeispiels erfolgt nach zumindest einem der Druckschritte eine Trocknung zumindest eines der ersten oder zweiten Anteile der Elektrodenpaste mittels einer Trocknungsvorrichtung.

Gemäss eines Ausführungsbeispiels wird die Druckkraft durch eine Kalandriervorrichtung erzeugt. Insbesondere kann die Pressvorrichtung als Kalandriervorrichtung ausgebildet sein.

Mittels einer Kalandriervorrichtung kann der Pressvorgang kontinuierlich erfolgen, sodass eine kontinuierliche Prozessführung ermöglicht ist.

Eine Elektrode für einen Energiespeicher umfasst eine erste Schicht, die einen ersten Anteil einer Elektrodenpaste enthält und zumindest einen zweite Schicht, die einen zweiten Anteil einer Elektrodenpaste enthält, wobei die zweite Schicht auf der ersten Schicht aufgetragen ist, dadurch gekennzeichnet dass die erste Schicht eine Porosität Y1 aufweist und die zweite Schicht eine Porosität Y2 aufweist, wobei die Porosität Y1 kleiner als die Porosität Y2 der zweiten Schicht ist. Insbesondere ist die Elektrode mittels eines Verfahrens nach einem der vorhergehenden Ansprüche hergestellt.

Ein Energiespeicher enthält eine Elektrode nach einem der vorhergehenden Ausführungsbeispiele. Der Energiespeicher kann mindestens eine Zelle enthalten, die eine Elektrode enthält, die als Anode ausgebildet ist und eine weitere Elektrode, die als Kathode ausgebildet ist. Die Zelle für den Energiespeicher umfasst mindestens eine Kathode, mindestens eine Anode, ein zwischen der Kathode und der Anode angeordnetes Separatorelement sowie einen Elektrolyten, in welchem sich die Kathode, die Anode und das Separatorelement im Betriebszustand befinden. Die Kathode enthält insbesondere LFP oder NMC, die Anode enthält insbesondere Graphit.

LFP wird in diesem Text als Kürzel für die Komponente Lithiumeisenphosphat, LiFePO₄ verwendet. NMC wird in diesem Text als Kürzel für die Komponente Lithium-Nickel-Mangan-Kobaltoxid, LiNiₓMn_{y}Co_{z}O₂ verwendet. Insbesondere enthält die NMC-Kathode NMC622, NMC111, NMC532 oder NMC811. NMC622 wird als Kürzel für die Komponente LiNi_{0.6}Mn_{0.2}Co_{0.2}O₂ verwendet. NMC111 wird als Kürzel für die Komponente LiNi_{0.3}Mn_{0.3}Co_{0.3}O₂ verwendet. NMC532 wird als Kürzel für die Komponente LiNi_{0.5}Mn_{0.3}Co_{0.2}O₂ verwendet. NMC811 wird als Kürzel für die Komponente LiNi_{0.8}Mn_{0.1}Co_{0.1}O₂ verwendet.

Gemäss eines Ausführungsbeispiels enthält die Anode Anodenpaste, die Graphit enthält. Gemäss eines Ausführungsbeispiels enthält zumindest eine der Kathodenpasten oder Anodenpasten einen Binder, der CMC enthält. CMC wird in diesem Text als Kürzel für die Komponente Carboxymethylcellulose verwendet.

Insbesondere kann nach einem Ausführungsbeispiel die Kathode eine Kathodenpaste umfassen, die einen Massenanteil an aktiver Masse von 50% bis einschliesslich 95% aufweist, den zumindest einen Binder, ein Lösungsmittel und/oder ein leitfähiges Additiv enthält. Beispielsweise enthält die Kathodenpaste als aktive Masse NMC oder LFP, als Binder CMC und als Leitadditiv Leitruss oder Graphit. Leitruss wird nachfolgend als C65 bezeichnet. Graphit wird nachfolgend als K6SL bezeichnet.

Gemäss eines Ausführungsbeispiels liegt der Massenanteil an CMC in der Kathodenpaste oder der Anodenpaste im Bereich von 1 [w%] bis einschliesslich 6[w%]. Der Massenanteil CMC kann gemäss eines Ausführungsbeispiels beispielsweise ungefähr 2 [w%] betragen. Gemäss eines Ausführungsbeispiels kann ein Bindergemisch, enthaltend eine Mehrzahl an Bindern vorgesehen sein, wobei einer der Binder CMC enthält. Beispielsweise kann das Bindergemisch CMC und Styrol-Butadien-Kautschuk, nachfolgend als SBR bezeichnet, enthalten. Der Massenanteil SBR kann gemäss eines Ausführungsbeispiels im Bereich von 1 [w%] bis einschliesslich 4 [w%] liegen, beispielsweise ungefähr 3 [w%] betragen. Insbesondere kann SBR als Suspension verwendet werden.

Als Leitadditive können gemäss eines Ausführungsbeispiels Leitruss, nachfolgend als C65 bezeichnet und Graphit, nachfolgend als KS6L bezeichnet, verwendet werden. Beispielsweise kann C65 in einem Bereich von 1 [w%] bis einschliesslich 4 [w%] liegen, insbesondere im Bereich von 2 [w%] bis einschliesslich 3.5 [w%] liegen. Beispielsweise kann KS6L in einem Bereich von 1 [w%] bis einschliesslich 4 [w%] liegen, insbesondere im Bereich von 1 [w%] bis einschliesslich 3 [w%] liegen. Gemäss eines Ausführungsbeispiels beträgt der Massenanteil an C65 3.75 [w%] und der Massenanteil an KS6L 1.25 [w%]. Gemäss eines Ausführungsbeispiels beträgt der Massenanteil an C65 2.5 [w%] und der Massenanteil an KS6L 2.5 [w%].

Gemäss eines Ausführungsbeispiels liegt die Porosität zumindest einer der Kathodenpasten und der Anodenpasten im Bereich von 20% bis einschliesslich 50%. Gemäss eines Ausführungsbeispiels liegt die Porosität zumindest einer der Kathodenpasten und der Anodenpasten im Bereich von 30% bis einschliesslich 40%.

Gemäss eines Ausführungsbeispiels beträgt der Massenanteil an aktiver Masse 50 bis einschliesslich 90 [w%], der Massenanteil an CMC 2 [w%] bis einschliesslich 6 [w%] und der Massenanteil an Leitadditiv 1 [w%] bis einschliesslich 6 [w%]. Die Kathodenpaste kann eine Porosität aufweisen, die im Bereich von 20% bis einschliesslich 50% liegt. Beispielsweise kann die Porosität einer Kathodenpaste oder Anodenpaste, die einen Massenanteil an aktiver Masse von 50 [w%] bis einschliesslich 90 [w%], einen Massenanteil an CMC von 5% und einen Massenanteil an Leitadditiv von 5 % enthält, im Bereich von 30% bis einschliesslich 40% liegen. Die Schichtdicke dieser Kathode kann im Bereich von 50 bis einschliesslich 300 µm, insbesondere 100 bis einschliesslich 200 µm betragen.

Insbesondere weist zumindest eine der Kathodenpasten oder Anodenpasten scherverdünnende Eigenschaften auf. Insbesondere weist zumindest eine der Kathodenpasten oder Anodenpasten 40% bis 60% Füllgrad auf.

Gemäss eines Ausführungsbeispiels weist zumindest eine der Kathodenpasten oder Anodenpasten eine Viskosität bei einer Schergeschwindigkeit von 10 [1/s] auf, die im Bereich von 5 bis einschliesslich 10 Pas liegt.

Gemäss eines Ausführungsbeispiels weist der Binder CMC eine Dichte von 0.85 bis 1.0 g/cm³ auf. Insbesondere beträgt die Viskosität des CMC-Binders 1500 bis 3000 [Pas] gemessen bei 25 Grad Celsius. Insbesondere umfasst der CMC Binder ein freifliessendes Pulver mit einer mittleren Partikelgrösse von 0.5 mm, welches einfach zu dispergieren oder aufzulösen ist.

Gemäss eines Ausführungsbeispiels enthält die Kathodenpaste LFP in Pulverform. Das LFP Pulver weist insbesondere folgende Partikelgrössenverteilung auf: Dmin: >0.1 µm, D10: 3.0 +/- 2.0 µm, D50: 11.0 +/- 1.5 µm, D90: 24.0 +/- 4.0 µm, Dmax: <53 µm. Insbesondere beträgt die spezifische Oberfläche des LFP 22 +/- 3.0 m²/g. Insbesondere beträgt die Klopfdichte des LFP 1.15 +/- 0.2 g/cm³. Insbesondere beträgt der Feuchtegehalt des LFP weniger als 800 ppm bei KF = 200°C.

Gemäss eines Ausführungsbeispiels liegt der pH-Wert der Kathodenpaste oder Anodenpaste im Bereich von 6 bis einschliesslich 10. Die Toleranz beträgt +/-1.5. Insbesondere enthält die Kathodenpaste 90 w% LFP als AM, 2 w% CMC als Binder, 3 w% SBR als Binder. Gemäss eines Ausführungsbeispiels enthält die Kathodenpaste ein Leitadditiv im Bereich von 2 w% bis einschliesslich 6 w%. Gemäss eines Ausführungsbeispiels enthält die Kathodenpaste Wasser als Lösungsmittel. Insbesondere enthält das Leitadditiv zumindest eine der Komponenten C65 und KS6L.

Gemäss eines Ausführungsbeispiels enthält die Kathodenpaste 90 w% NMC als AM, zumindest einen Binder aus der Gruppe bestehend aus CMC und SBR mit einem Massenanteil von 2 w% bis einschliesslich 6%, ein Leitadditiv im Bereich von 2 w% bis einschliesslich 6 w%, ferner enthaltend zumindest ein Lösungsmittel aus der Gruppe bestehend aus Wasser. Insbesondere enthält das Leitadditiv zumindest eine der Komponenten C65 und KS6L. Insbesondere enthält die Kathodenpaste ein Tensid, insbesondere ein nicht-ionisches Tensid.

Das Tensid kann ein Alkoholalkoxylat umfassen, beispielsweise Isopropanol oder ein nichtionisches Alkoholoxylattensid, welches als Ecosurf ^{™} LF-45 vermarktet wird und nachfolgend als LF-45 bezeichnet wird. Das Tensid kann Polyethylenglycol-p-isooctylphenylether (C₁₄H₂₂O(C₂H₄O)ₙ) umfassen, welches als Triton^{™} X-100 vermarktet wird, nachfolgend als Triton X-100 bezeichnet. Das Tensid kann Polyoxyethylen (10) isooctylcyclohexylether oder 4-(C₈H₁₇)C₆H₁₀(OCH₂CH₂)nOH, mit n~10 umfassen, welches als Triton^{™} reduced vermarktet wird und nachfolgend als Triton-r bezeichnet wird. Das Tensid kann 2-[4-(2,4,4-trimethylpentan-2-yl) phenoxy] ethanol umfassen, welches als Ecosurf EH-9 ^{™} vermarktet wird und nachfolgend als EH-9 bezeichnet wird.

Gemäss eines Ausführungsbeispiels enthält die Anodenpaste 90 w% Graphit als AM, zumindest einen Binder aus der Gruppe bestehend aus CMC und SBR mit einem Massenanteil von 2 w% bis einschliesslich 6%, ein Leitadditiv im Bereich von 2 w% bis einschliesslich 6 w%, sowie Wasser als Lösungsmittel. Insbesondere enthält das Leitadditiv zumindest eine der Komponenten C65 und KS6L. Beispielsweise enthält das Leitadditiv 2.5 w% C65 und 2.5 w% KS6L.

Gemäss eines Ausführungsbeispiels enthält zumindest eine der Kathodenpasten oder Anodenpasten einen zusätzlichen Binder. Der zusätzliche Binder kann eine Emulsion enthalten, die eine fluorierte Polyacrylatemulsion umfasst oder SBR enthalten. SBR wird als Kürzel für Styrol-Butadien-Kautschuk verwendet. Beispielsweise kann als zusätzlicher Binder TRD202A oder TRD203A zum Einsatz kommen. TRD202A bezeichnet einen wasserbasierten Hybridpolymerbinder, der ein Acrylpolymer und ein Fluoropolymer, CMC, und ein leitfähiges Kohlenstoffadditiv enthält.

Der zusätzliche Binder kann zumindest ein Element aus der Gruppe bestehend aus SBR, TRD202A, TRD203A enthalten. (Bitte Zusammensetzung von TRD202A und TRD203A angeben)

Gemäss eines Ausführungsbeispiels enthält zumindest eine der Kathodenpasten oder Anodenpasten ein Dispergierhilfsmittel. Insbesondere umfasst das Dispergierhilfsmittel ein Tensid. Das Dispergierhilfsmittel kann zumindest ein Element aus der Gruppe bestehend aus Isopropanol, Triton X-100, Triton-r, EH-9 oder LF-45 enthalten.

Gemäss eines Ausführungsbeispiels sind zumindest eine der Kathoden, Anoden und der Separatorelemente im Siebdruckverfahren hergestellt. Insbesondere kann zumindest eine der Anoden oder Kathoden eine Anodenpaste oder Kathodenpaste enthalten, die mehrere Anodenpastenteilschichten oder Kathodenpastenteilschichten enthält oder die aus mehreren Anodenpastenteilschichten oder Kathodenpastenteilschichten besteht.

Gemäss eines Ausführungsbeispiels wird zumindest eine der ersten Kathoden, der Anoden oder Separatorelemente oder zumindest eine der entsprechenden Kathodenpasten oder Anodenpasten verdichtet.

Gemäss eines Ausführungsbeispiels kann zumindest eine der Kathoden oder der Anoden aus mehreren Schichten bestehen. Insbesondere kann nach einem Ausführungsbeispiel die Kathode eine Dicke von 100 µm bis einschliesslich 300 µm aufweisen. Beispielsweise kann die Kathode eine Dicke von 150 µm bis einschliesslich 300 µm aufweisen. Insbesondere kann nach einem Ausführungsbeispiel die Anode eine Dicke von 30 µm bis einschliesslich 300 µm aufweisen. Beispielsweise kann die Anode eine Dicke von 30 µm bis einschliesslich 300 µm aufweisen.

Insbesondere kann nach einem Ausführungsbeispiel das Separatorelement eine Dicke von 1 µm bis einschliesslich 50 µm aufweisen. Insbesondere kann nach einem Ausführungsbeispiel der erste Ableiter eine Dicke von 1 µm bis einschliesslich 50 µm aufweisen. Insbesondere kann nach einem Ausführungsbeispiel der zweite Ableiter eine Dicke von 1 µm bis einschliesslich 50 µm aufweisen.

Insbesondere kann nach einem Ausführungsbeispiel der erste Ableiter aus Aluminium oder einer Aluminiumverbindung bestehen. Der erste Ableiter ist gemäss diesem Ausführungsbeispiel als positiver Ableiter ausgebildet. Insbesondere kann nach einem Ausführungsbeispiel der zweite Ableiter aus Kupfer oder einer Kupferverbindung bestehen. Der zweite Ableiter ist gemäss diesem Ausführungsbeispiel als negativer Ableiter ausgebildet.

Gemäss eines Ausführungsbeispiels enthält der Energiespeicher ein Gehäuse, einen ersten Ableiter, zumindest eine der Zellen, einen zweiten Ableiter, wobei das Gehäuse ein Gehäuseelement umfasst, wobei das Gehäuseelement ein Element aus der Gruppe bestehend aus einem Gehäuseboden, einem Gehäusedeckel einem Gehäuseseitenelement umfasst. Insbesondere sind der erste Ableiter und der zweite Ableiter mit der Zelle derart verbunden, dass ein Elektronenfluss/Ionenfluss vom ersten Ableiter durch die Zelle zum zweiten Ableiter erfolgen kann, wenn ein geschlossener Stromkreis ausgebildet ist.

Gemäss eines Ausführungsbeispiels enthält zumindest einer der ersten oder zweiten Ableiter eine siebgedruckte Ableiterschicht. Gemäss eines Ausführungsbeispiels enthält das Gehäuse zumindest ein siebgedrucktes Gehäuseelement. Insbesondere kann die Zelle einen flüssigen Elektrolyten enthalten.

Ein Verfahren zur Herstellung einer Zelle für einen Energiespeicher, wobei die Zelle mindestens eine Kathode, eine Anode, ein zwischen der Kathode und der Anode angeordnetes Separatorelement sowie einen Elektrolyten umfasst, wobei die Kathode, die Anode und das Separatorelement im Betriebszustand mit dem Elektrolyten in Kontakt sind, ist dadurch gekennzeichnet, dass die Kathode mittels einer ersten Siebdruckvorrichtung hergestellt wird, die Anode mittels einer zweiten Siebdruckvorrichtung hergestellt wird, wobei die Kathode eine Kathodenpaste umfasst, die LFP oder NMC enthält, wobei die Anode eine Anodenpaste umfasst, die Graphit enthält, wobei zumindest eine der Kathoden oder Anoden in mindestens zwei aufeinanderfolgenden Druckschritte hergestellt wird, wobei in einem ersten Druckschritt ein erster Anteil einer Elektrodenpaste auf ein Substrat aufgetragen wird, wobei anschliessend eine Druckkraft auf den ersten Anteil der Elektrodenpaste aufgebracht wird, um den ersten Anteil der Elektrodenpaste zu verdichten, sodass ein verdichteter erster Anteil der Elektrodenpaste erhalten wird, wobei in einem zweiten Druckschritt ein zweiter Anteil der Elektrodenpaste auf den verdichteten ersten Anteil der Elektrodenpaste aufgetragen wird, wobei anschliessend eine Druckkraft auf den zweiten Anteil der Elektrodenpaste aufgebracht wird, um den zweiten Anteil der Elektrodenpaste zu verdichten, sodass ein verdichteter zweiter Anteil der Elektrodenpaste erhalten wird.

Insbesondere kann zumindest eine der Kathodenpasten oder Anodenpasten einen Binder enthalten, der CMC enthält, wobei Wasser als Lösungsmittel verwendet wird.

Ein Verfahren zur Herstellung eines Energiespeichers, welcher ein Gehäuse, eine Zelle, einen ersten Ableiter und einen zweiten Ableiter umfasst, wobei die Zelle mindestens eine Kathode, mindestens eine Anode, ein zwischen der Kathode und der Anode angeordnetes Separatorelement sowie einen Elektrolyten umfasst, wobei sich die Kathode, die Anode und das Separatorelement im Betriebszustand im Elektrolyten befinden, ist dadurch gekennzeichnet, dass die Kathode mittels einer ersten Siebdruckvorrichtung hergestellt wird, die Anode mittels einer zweiten Siebdruckvorrichtung hergestellt wird, wobei die Kathode durch Siebdruck mit dem ersten Ableiter verbunden wird, wobei das Separatorelement zwischen der Kathode und der Anode angeordnet wird, wobei die Anode durch Siebdruck mit dem zweiten Ableiter verbunden wird. Gemäss eines Ausführungsbeispiels wird das Separatorelement mittels einer dritten Siebdruckvorrichtung hergestellt. Insbesondere umfasst die Kathode eine Kathodenpaste, die LFP oder NMC enthält. Insbesondere umfasst die Anode eine Anodenpaste, die Graphit enthält. Insbesondere enthält zumindest eine der Kathodenpasten oder Anodenpasten einen Binder, der CMC enthält.

Gemäss eines Ausführungsbeispiels werden die Kathodenpaste oder Anodenpaste für einen Energiespeicher nach einem der vorhergehenden Ausführungsbeispiele in einem Extruder oder auf einer Kalandriervorrichtung hergestellt. Insbesondere kann zumindest eine der Kathodenpasten oder Anodenpasten zu einem Kathodenpastenextrudat oder Anodenpastenextrudat extrudiert werden. Insbesondere kann das Kathodenpastenextrudat oder Anodenpastenextrudat im Siebdruckverfahren zu der Kathode oder Anode weiterverarbeitet werden.

Gemäss eines Ausführungsbeispiels wird der erste Ableiter mittels einer ersten Ableitersiebdruckvorrichtung hergestellt. Gemäss eines Ausführungsbeispiels wird der zweite Ableiter mittels einer zweiten Ableitersiebdruckvorrichtung hergestellt.

Gemäss eines Ausführungsbeispiels erfolgt das Siebdruckverfahren zur Herstellung der Kathode in der ersten Siebdruckvorrichtung, wobei die erste Siebdruckvorrichtung eine erste Trocknungseinheit und eine erste Stapelvorrichtung enthält, mittels welcher die Kathode siebgeruckt, gegebenenfalls getrocknet und mit dem ersten Ableiter verbunden wird. Insbesondere erfolgt das Siebdruckverfahren zur Herstellung der Anode in der zweiten Siebdruckvorrichtung, wobei die zweite Siebdruckvorrichtung eine zweite Trocknungseinheit und eine zweite Stapelvorrichtung enthält, mittels welcher die Anode siebgeruckt, gegebenenfalls getrocknet und mit dem zweiten Ableiter verbunden wird. Insbesondere kann eine dritte Siebdruckvorrichtung zur Herstellung des Separatorelements vorgesehen sein. Gemäss eines Ausführungsbeispiels sind eine erste Ableitersiebdruckvorrichtung, gegebenenfalls eine erste Ableitertrocknungseinheit und eine erste Ableiterstapelvorrichtung vorgesehen, mittels welcher der erste Ableiter siebgeruckt, gegebenenfalls getrocknet und mit der Zelle verbunden wird. Gemäss eines Ausführungsbeispiels sind eine zweite Ableitersiebdruckvorrichtung, gegebenenfalls eine zweite Ableitertrocknungseinheit und eine zweite Ableiterstapelvorrichtung vorgesehen, mittels welcher der zweite Ableiter siebgeruckt, gegebenenfalls getrocknet und mit der Zelle wird. Gemäss eines Ausführungsbeispiels sind eine Gehäuseelementsiebdruckvorrichtung, gegebenenfalls eine Gehäuseelementtrocknungsvorrichtung oder eine Gehäuseelementstapelvorrichtung vorgesehen, mittels welcher zumindest ein Gehäuseelement siebgedruckt wird.

LFP oder NMC kann in Pulverform mit einem leitfähigen Additiv gemischt werden und mit Wasser und einem Binder gemischt werden, wodurch eine strukturviskose Kathodenpaste erhältlich ist, die mittels eines Siebdruckverfahrens verarbeitbar ist. In Ergänzung zu dem CMC-Binder kann eine Emulsion verwendet werden, die eine fluorierte Polyacrylatemulsion enthält. Beispielsweise kann TRD202A oder TRD203A zum Einsatz kommen.

Insbesondere kann nach einem Ausführungsbeispiel die Anode einen Massenanteil an aktiver Masse von 50% bis einschliesslich 95% aufweisen, einen Binder, ein Lösungsmittel und/oder ein leitfähiges Additiv enthalten. Beispielsweise enthält die Anode als aktive Masse Graphit, als Binder CMC und als Leitadditiv C65. Gemäss eines Ausführungsbeispiels beträgt der Massenanteil an aktiver Masse 90%, der Massenanteil an CMC 5% und der Massenanteil an Leitadditiv 5 %. Die Anode kann eine Porosität aufweisen, die im Bereich von 20% bis einschliesslich 50% liegt. Beispielsweise kann die Porosität einer Anode, die einen Massenanteil an aktiver Masse von 90%, einen Massenanteil an CMC von 5% und einen Massenanteil an Leitadditiv von 5 % enthält, 30% aufweisen. Die Schichtdicke einer Anode kann im Bereich von 50 µm bis einschliesslich 300 µm liegen. Insbesondere beträgt die Schichtdicke dieser Anode 100 µm.

Insbesondere kann nach einem Ausführungsbeispiel das Separatorelement aus zwei Deckschichten aus Polypropylen und einer zwischen den beiden Deckschichten angeordneten Zwischenschicht aus Polyethylen bestehen. Gemäss dieses Ausführungsbeispiels kann die Dicke des Separatorelements insbesondere 38 µm betragen. Gemäss eines Ausführungsbeispiels enthält das Separatorelement eine Mischung aus Partikeln aus anorganischen Substanzen in einem Matrixmaterial und einem mikroporösen Polyolefin, welches geeignet ist, einen Ionenfluss von der Anode zur Kathode zu unterbinden. Die Partikel aus anorganischen Substanzen können zumindest ein Element aus der Gruppe bestehend aus SiO₂, Al₂O₃, CaCO₃, TiO₂, SiS₂, SiPO₄ enthalten. Das Matrixmaterial kann zumindest ein Element aus der Gruppe bestehend aus Polyethylenoxid, Polyvinylidenfluorid, (nachfolgend als PVDF bezeichnet, N-Methyl-2-pyrrolidon (NMP), CMC, Polytetrafluorethylen (PTFE), Polyurethan (PU), Polyacrylnitril (PAN), Polymethylmethacrylat (PMMA) oder Polytetraethylenglykoldiacrylat enthalten. Das mikroporäse Polyolefin kann eine Polyolefinmembran umfassen, beispielsweise eine Polyethylenmembran. Das Separatorelement kann eine Porosität aufweisen, die im Bereich von 20% bis 80% liegt.

Insbesondere kann das Separatorelement nach einem Ausführungsbeispiel einen Elektrolyten enthalten, der zu 50 Mol% aus LiPF₆ und zu 50 Mol % aus einer Mischung von Ethylencarbonat (EC) und Diethylcarbonat (DEC) besteht. Alternativ oder ergänzend hierzu kann der Elektrolyt zumindest eine der Komponenten MDO, VC und EMC enthalten. Als MDO wird die Komponente 3-Methyl-1,4,3-Dioxazol-5-one bezeichnet. Als EMC wird die Komponente Ethylmethylcarbonat bezeichnet. Als VC wird die Komponente Vinylencarbonat bezeichnet. Für die Zyklisierungstests wird bevorzugt der Elektrolyt 1 M LiPF6 in EC:DEC (1:1 wt. %), 99.9 % H₂O: 20 ppm max, 2 % VC verwendet, der nachfolgend als STD bezeichnet wird.

Um eine Paste für eine Kathode, eine Anode oder ein Separatorelement mittels eines Siebdruckverfahrens verarbeiten zu können, ist es vorteilhaft, wenn diese strukturviskose Eigenschaften aufweist, das heisst, die Viskosität der Paste nimmt bei zunehmenden Scherkräften ab. Wenn Scherkräfte auf die Paste wirken, beispielsweise beim Auftragen der Paste auf ein Sieb einer Siebdruckvorrichtung, nimmt ihre Viskosität ab, was das Siebdrucken erleichtert. Wenn Scherkräfte auf die Paste wirken, entspricht deren Viskosität der dynamischen Viskosität. Die dynamische Viskosität beträgt vorteilhafterweise nicht mehr als 100 Pas, insbesondere nicht mehr als 75 Pas, besonders bevorzugt nicht mehr als 60 Pas. Nach Abschluss des Siebdruckverfahrens erhöht sich die Viskosität auf die statische Viskosität, weil der Einfluss der Scherkräfte wegfällt. Beispielsweise kann die statische Viskosität der entsprechenden Paste im Ruhezustand mehr als 150 Pas betragen. Beispielsweise kann die statische Viskosität im Bereich von 150 bis 1000 Pas liegen. Durch einen nachträglichen Trocknungsvorgang kann die statische Viskosität der Paste weiter erhöht werden. Zusätzlich kann die Paste komprimiert werden, beispielsweise mittels Kalandrieren oder Walzen.

Gemäss eines Ausführungsbeispiels sind die Zellen als Pouchzellen ausgebildet. Insbesondere haben die Zellen nachfolgende Zellabmessungen: beispielsweise liegt die Länge der Zelle im Bereich von 340 mm bis einschliesslich 542 mm. Beispielsweise liegt die Breite der Zelle im Bereich von 80 mm bis einschliesslich 101 mm. Beispielsweise liegt die Dicke der Zelle im Bereich von 8.5 bis einschliesslich 14 mm.

Gemäss eines Ausführungsbeispiels weisen die Zellen einander gegenüberliegende Anschlüsse auf. Beispielsweise liegt die Länge der Anschlüsse im Bereich von 16 bis einschliesslich 25 mm. Beispielsweise liegt die Breite der Anschlüsse von 30 bis einschliesslich 55 mm. Beispielsweise liegt die Dicke der Anschlüsse im Bereich von 0.2 bis einschliesslich 0.4 mm. Gemäss eines Ausführungsbeispiels enthalten die Anschlüsse eine Schutzbeschichtung aus Nickel mit einer Schichtdicke von mindestens 0.01 mm. Gemäss eines Ausführungsbeispiels enthalten die positiven und negativen Anschlüsse Kupfer als Grundmaterial.

Gemäss eines Ausführungsbeispiels beträgt die Zellmasse maximal 3 kg. Gemäss eines Ausführungsbeispiels beträgt das Volumen der Zelle höchstens als 3 Liter. Gemäss eines Ausführungsbeispiels enthält die Zelle eine gefaltete Zelldichtung. Gemäss eines Ausführungsbeispiels ist eine Vorrichtung zur Sicherung einer Zellüberwachung für eine einzelne Zelle vorgesehen (single cell supervisor).

Gemäss eines Ausführungsbeispiels beträgt die Kapazität der Zelle mindestens 59 Ah. Gemäss eines Ausführungsbeispiels beträgt die spezifische Energie mindestens 242 Wh/kg insbesondere beträgt die die spezifische Energie mindestens 283 Wh/kg.

Insbesondere kann nach einem Ausführungsbeispiel der Energiespeicher eine Mehrzahl von Zellen enthalten, die mindestens einen Zellstapel ausbilden. Insbesondere kann nach einem Ausführungsbeispiel die Mehrzahl von Zellen in Parallelschaltung oder in Serienschaltung angeordnet sein. Bei Serienschaltung kann eine Betriebsspannung von mindestens 12 V erhältlich sein.

Insbesondere kann nach einem Ausführungsbeispiel der Zellstapel mindestens eine erste und eine zweite Zelle aufweisen, wobei eine Zwischenschicht zwischen der ersten und zweiten Zelle angeordnet ist, wobei die Zwischenschicht den Ableiter für die Kathode der ersten Zelle vom Ableiter für die Anode der zweiten Zelle trennt, sodass sich eine Gesamtspannung zwischen dem ersten Ableiter und dem zweiten Ableiter aus der Summe der Zellspannungen der ersten und zweiten Zelle ergibt. Insbesondere kann nach einem Ausführungsbeispiel die Zwischenschicht elektrisch leitfähig sein, sodass ein Stromfluss oder Ionenfluss von der ersten Zelle in die zweite Zelle erfolgen kann.

Insbesondere können nach einem Ausführungsbeispiel die Kathode oder Anode und das zwischen Kathode und Anode angeordnete Separatorelement in der Zelle derart gestapelt sein, dass das Separatorelement oberhalb der Kathode angeordnet ist und die Anode oberhalb des Separatorelements angeordnet ist. Das Separatorelement liegt gemäss diesem Ausführungsbeispiel auf der Kathode auf.

Insbesondere kann nach einem Ausführungsbeispiel Kathode, die Anode oder das Separatorelement ein porenhaltiges Material enthalten.

Insbesondere können der erste oder zweite Ableiter nach einem Ausführungsbeispiel zumindest teilweise ein Gehäuse ausbilden. Insbesondere können nach einem Ausführungsbeispiel der erste oder zweite Ableiter zumindest teilweise ein Kühlelement ausbilden. Gemäss eines Ausführungsbeispiels umfasst der Energiespeicher eine oder mehrere Zellen sowie die ersten und zweiten Ableiter. Als Ableiter kann beispielsweise eine Aluminiumfolie oder eine Nickelfolie zum Einsatz kommen.

Insbesondere kann nach einem Ausführungsbeispiel auf der ersten Druckauflage oder der zweiten Druckauflage oder der dritten Druckauflage eine Mehrzahl von entsprechenden Kathoden oder Anoden oder Separatorelementen für eine Mehrzahl von Zellen nebeneinander angeordnet werden.

Die Zelle kann in einem Gehäuse eingeschlossen werden. Ein derartiges Gehäuse kann vorzugsweise einen Kunststoff enthalten, der beständig gegenüber sämtlichen Komponenten ist, aus welchen die Kathode, Anode, das Separatorelement und der Elektrolyt besteht. Das Gehäuse kann als siebgedrucktes Gehäuse ausgebildet sein, wie nachfolgend beschrieben wird.

Ein Akkumulator gemäss eines der vorhergehenden Ausführungsbeispiele umfasst ein Gehäuse, einen ersten Ableiter, eine Kathode, ein Separatorelement, eine Anode, einen zweiten Ableiter. Das Gehäuse umfasst ein Gehäuseelement, wobei das Gehäuseelement ein Element aus der Gruppe bestehend aus einem Gehäuseboden, einem Gehäusedeckel und zumindest einem Gehäuseseitenelement umfasst. Der erste Ableiter ist gemäss dieses Ausführungsbeispiels auf dem Gehäuseboden angeordnet. Die Kathode ist auf dem ersten Ableiter angeordnet. Das Separatorelement ist auf der Kathode angeordnet. Die Anode ist auf dem Separatorelement angeordnet. Der zweite Ableiter ist auf der Anode angeordnet. Der Gehäusedeckel ist auf dem zweiten Ableiter angeordnet. Zumindest die Kathode ist als siebgedruckte Elektrode ausgebildet, das Separatorelement ist als siebgedruckte Trennschicht und die Anode als zweite siebgedruckte Elektrode ausgebildet. Der erste Ableiter ist angrenzend an den Gehäuseboden angeordnet und teilweise innerhalb eines Gehäuseseitenelements angeordnet. Der zweite Ableiter ist angrenzend an den Gehäusedeckel ausgebildet und teilweise innerhalb eines Gehäuseseitenelements angeordnet.

Insbesondere enthält zumindest eine der Kathoden oder Anoden mehrere siebgedruckte Teilschichten. Die Kathode oder Anode kann eine erste siebgedruckte Teilschicht enthalten, deren Zusammensetzung sich von einer zweiten siebgedruckten Teilschicht unterscheidet. Zumindest einer der ersten oder zweiten Ableiter kann eine siebgedruckte Ableiterschicht enthalten. Das Gehäuse kann zumindest ein siebgedrucktes Gehäuseelement enthalten. Ein flüssiger Elektrolyt oder ein Feststoffelektrolyt können vorgesehen werden.

### Kurzbeschreibung der Zeichnungen

Nachfolgend wird der erfindungsgemässe Energiespeicher anhand einiger Ausführungsbeispiele dargestellt. Es zeigen
Fig. 1 einen Schnitt durch eine Elektrode nach dem Stand der Technik, die mittels eines Pressverfahrens hergestellt ist,
Fig. 2 einen Schnitt durch eine Elektrode, die mittels eines Druckverfahrens hergestellt ist,
Fig. 3 ein Detail einer Schicht nach einem ersten Ausführungsbeispiel der Erfindung für eine Elektrode gemäss Fig. 2,
Fig. 4 ein Detail einer Schicht nach einem zweiten Ausführungsbeispiel der Erfindung für eine Elektrode gemäss Fig. 2,
Fig. 5 ein Detail einer aus mehreren Teilschichten bestehenden Schicht nach einem dritten Ausführungsbeispiel der Erfindung für eine Elektrode gemäss Fig. 2.
Fig. 6 ein Detail einer aus mehreren Teilschichten bestehenden Schicht nach einem vierten Ausführungsbeispiel der Erfindung für eine Elektrode gemäss Fig. 2.
Fig. 7 ein Detail einer Elektrode mit doppelseitiger Beschichtung gemäss eines fünften Ausführungsbeispiels der Erfindung.
Fig. 8a bis Fig. 8d eine Darstellung der Veränderungen in einer Schicht, die durch den Pressvorgang einer im Druckverfahren hergestellten Schicht erfolgen,
Fig. 9a bis Fig. 9c eine Darstellung des Herstellungsverfahrens für die Elektrode gemäss des vierten Ausführungsbeispiels der Erfindung.

### Detaillierte Beschreibung der Zeichnungen

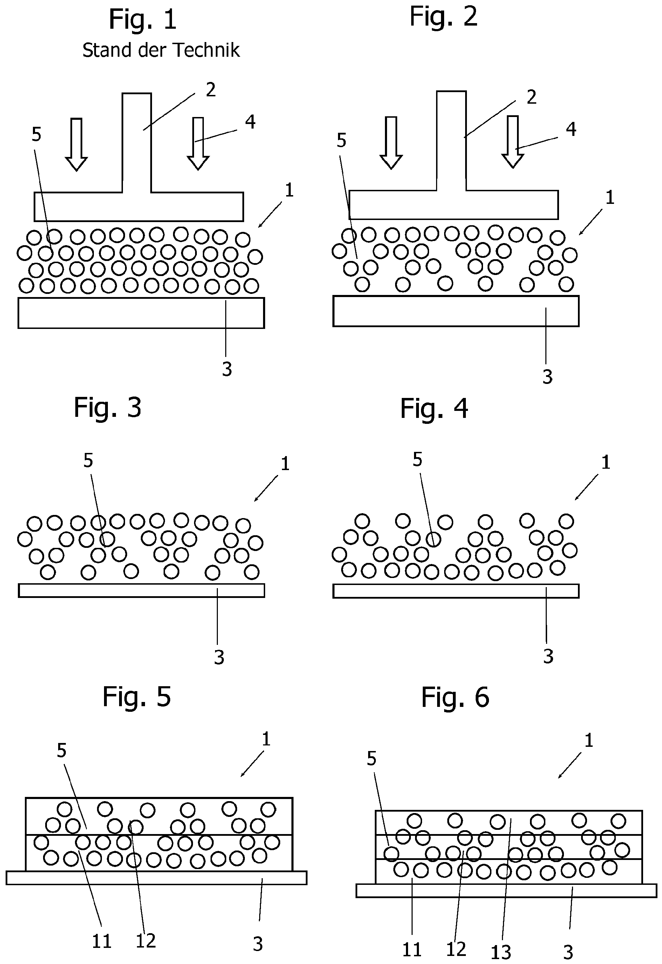

Fig. 1 zeigt einen Schnitt durch eine Elektrode 1 nach dem Stand der Technik, die mittels eines Pressverfahrens hergestellt ist. In dieser Darstellung ist das Pressverfahren symbolisch durch eine Pressvorrichtung 2 dargestellt, der eine Druckkraft ausübt, die auf die auf einem Substrat 3 liegende Elektrode 1 wirkt. Die Pfeile 4 symbolisieren die Wirkrichtung der Druckkraft. Die mittels des Pressverfahrens hergestellte Elektrode ist durch eine Schicht 5 gekennzeichnet, die homogen aufgebaut ist. Die Schicht 5 wird vereinfacht durch eine Kugelwolke dargestellt, wobei die Kugeln die Partikel der Schicht darstellen. Die Partikel sind somit homogen in der Schicht 5 angeordnet, d.h. die Kugeln haben zueinander im Wesentlichen denselben Abstand, unabhängig davon, an welcher Stelle der Schicht 5 sie sich befinden. Die Darstellung der Partikel als Kugeln ist eine vereinfachte, idealisierte Darstellung, die nicht vollständig der Realität entsprechen muss. Dieselben Überlegungen gelten auch für Schichten 5, die aus Partikeln aufgebaut sind, deren Form von der Kugelform abweicht.

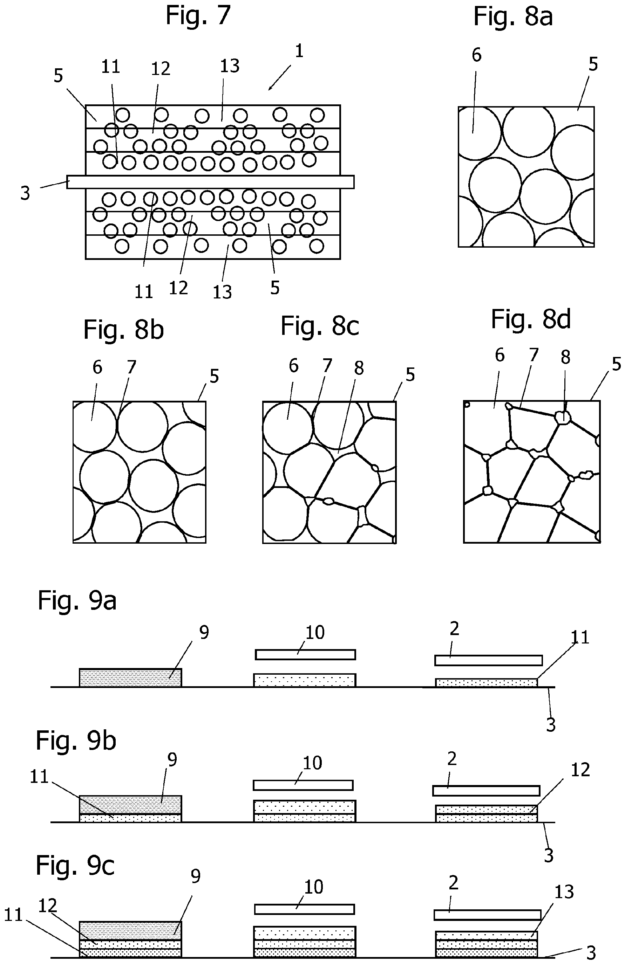

Fig. 2 zeigt einen Schnitt durch eine Elektrode 1, die mittels eines Druckverfahrens hergestellt ist, wobei die im Druckverfahren hergestellte Schicht 5 einem Pressvorgang ausgesetzt wird. Die Beschreibung des Druckverfahrens wird später noch im Detail in Zusammenhang mit Fig. 8a erfolgen. Die mittels des Druckverfahrens hergestellte Elektrode, die nachträglich einer Verdichtung durch einen Pressvorgang unterworfen worden ist, weist einen inhomogenen Aufbau der Schicht 5 auf. Die Schicht 5 wird vereinfacht durch eine Kugelwolke dargestellt, wobei die Kugeln die Partikel der Schicht 5 darstellen. Die Partikel sind somit inhomogen in der Schicht 5 verteilt. In der Fig. 2 ist erkennbar, dass die Partikel des Schichtbereichs, der nahe an der Pressvorrichtung 2 angeordnet ist, dichter gepackt sind, als die Partikel, die sich in zunehmender Entfernung zur Pressvorrichtung befinden.

Fig. 3 zeigt ein Detail einer Schicht 5 nach einem ersten Ausführungsbeispiel der Erfindung für eine Elektrode gemäss Fig. 2 nach Abschluss des Pressvorgangs. Mit zunehmendem Abstand vom Substrat 3 nimmt die Porosität in der Schicht 5 ab, weil die von der Pressvorrichtung weiter entfernten Schichtbereiche weniger stark verdichtet werden. Üblicherweise sind die Zwischenräume zwischen den Partikeln mit einem Fluid gefüllt, welches während des Pressvorgangs entweichen kann. Insbesondere kann das Substrat 3 fluiddurchlässig sein, sodass das Fluid beim Pressvorgang durch das Substrat 3 hindurch entweichen kann.

Fig. 4 zeigt ein Detail einer Schicht 5 nach einem zweiten Ausführungsbeispiel der Erfindung für eine Elektrode gemäss Fig. 2, in welcher der Schichtaufbau dahingehend verändert worden ist, dass die Porosität der Schicht 5 mit zunehmendem Abstand vom Substrat 3 zunimmt. Diese Variante ist vorteilhaft für einen Ionentransport, da ein Elektrolyt besser von einer Schicht 5 aufgenommen werden kann, deren Porosität mit zunehmendem Abstand vom Substrat 3 zunimmt. Dieses Ergebnis kann beispielsweise erhalten werden, wenn ein zwischen den Partikeln befindliches Fluid beim Pressvorgang über die Pressvorrichtung 2 entfernt wird (nicht dargestellt).

Fig. 5 zeigt ein Detail einer aus mehreren Teilschichten bestehenden Schicht nach einem dritten Ausführungsbeispiel der Erfindung für eine Elektrode gemäss Fig. 2. Gemäss dieses Ausführungsbeispiels ist ebenfalls ein Schichtaufbau gezeigt, für welchen die Porosität mit zunehmendem Abstand vom Substrat 3 zunimmt. Allerdings erfolgt die Herstellung dieser Schicht auf eine andere Weise, nämlich durch Herstellung von mehreren Teilschichten im Druckverfahren. Die Schicht umfasst eine erste Teilschicht 11, die einen ersten Anteil einer Elektrodenpaste enthält und zumindest eine zweite Teilschicht 12, die einen zweiten Anteil einer Elektrodenpaste enthält, wobei die zweite Teilschicht 12 auf der ersten Teilschicht aufgetragen ist. Die erste Teilschicht weist eine gemittelte Porosität Y1 auf und die zweite Teilschicht weist eine gemittelte Porosität Y2 auf, wobei die gemittelte Porosität Y1 kleiner als die gemittelte Porosität Y2 der zweiten Teilschicht 12 ist.

Fig. 6 zeigt ein Detail einer aus mehreren Teilschichten bestehenden Schicht 5 nach einem vierten Ausführungsbeispiel der Erfindung für eine Elektrode gemäss Fig. 2. Gemäss dieses Ausführungsbeispiels ist ebenfalls ein Schichtaufbau gezeigt, für welchen die Porosität mit zunehmendem Abstand vom Substrat 3 zunimmt. Die Herstellung dieser Schicht wie gemäss Fig. 5 im Druckverfahren erfolgen. Die Schicht umfasst eine erste Teilschicht 11, die einen ersten Anteil einer Elektrodenpaste enthält, eine zweite Teilschicht 12, die einen zweiten Anteil einer Elektrodenpaste enthält, sowie eine dritte Teilschicht 13, die einen dritten Anteil einer Elektrodenpaste enthält, wobei die zweite Teilschicht 12 auf der ersten Teilschicht aufgetragen ist und die dritte Teilschicht 13 auf der zweiten Teilschicht 12 aufgetragen ist. Die erste Teilschicht weist eine gemittelte Porosität Y1 auf, die zweite Teilschicht weist eine gemittelte Porosität Y2 auf, wobei die gemittelte Porosität Y1 kleiner als die gemittelte Porosität Y2 der zweiten Teilschicht 12 ist. Die dritte Teilschicht weist eine gemittelte Porosität Y3 auf, wobei die gemittelte Porosität Y3 zumindest kleiner als die gemittelte Porosität Y1 der ersten Teilschicht 11 ist. Gemäss des vorliegenden Ausführungsbeispiels ist die gemittelte Porosität Y3 der dritten Teilschicht 13 auch geringer als die gemittelte Porosität Y2 der zweiten Teilschicht 12.

Fig. 7 zeigt ein Detail einer Elektrode 1 mit doppelseitiger Beschichtung gemäss eines fünften Ausführungsbeispiels der Erfindung. Gemäss dieses Ausführungsbeispiels werden Schichten 5 auf gegenüberliegenden Seiten des Substrats 3 hergestellt. Gemäss dieses Ausführungsbeispiels werden zwei Schichten 5, wie sie in Zusammenhang mit Fig. 6 beschrieben sind, auf beiden Seiten des Substrats 3 aufgetragen. Selbstverständlich kann anstelle der Schicht 5 gemäss Fig. 6 jede der Schichten gemäss Fig. 2 bis Fig. 5 auf das Substrat aufgetragen werden.

Fig. 8a bis Fig. 8d zeigen Darstellungen der Veränderungen in einer Schicht 5 für eine Elektrode 1 eines Energiespeichers, die durch den Pressvorgang der im Druckverfahren hergestellten Schicht 5 erfolgen. Fig. 8a zeigt einen Ausschnitt aus einem losen Pulver, welches Partikel 6 enthält. Die Partikel 6 berühren einander, wobei die Berührung im Wesentlichen punktförmig erfolgt. Fig. 8b zeigt das Anfangsstadium des Druckverfahrens, das heisst, das Aufdrucken der als eine Elektrodenpaste ausgebildeten Schicht 5 auf ein Substrat. Da bereits durch das Druckverfahren Druck- und Scherkräfte auf die Schicht 5 einwirken, entstehen Korngrenzen 7. Die Korngrenzen 7 sind dadurch gekennzeichnet, dass die punktförmige Auflage der Partikel 6 aufeinander durch eine Auflage der Partikel entlang einer gemeinsamen Oberfläche erfolgt. Während oder im Anschluss an das Druckverfahren wird zwischen den Partikeln 6 befindliches Fluid entfernt. Beispielsweise kann ein Trocknungsvorgang vorgesehen werden, um die Entfernung von unerwünschten Fluiden aus den Partikelzwischenräumen zu unterstützen.

Fig. 8c zeigt eine Zwischenstufe der Verdichtung der Schicht 5 durch ein Pressverfahren. Während der Verdichtung werden die Korngrenzen 7 vergrössert und die Partikelzwischenräume 8 nehmen an Volumen ab, sodass die Porosität der Schicht 5 verringert wird. Die Partikel 6 werden zunehmend verformt. Fig. 8d zeigt das Endstadium der Verdichtung.

Fig. 9a bis Fig. 9c zeigen eine Darstellung eines Herstellungsverfahrens für die Elektrode gemäss des vierten Ausführungsbeispiels der Erfindung. Fig. 9a zeigt die Herstellung der ersten Teilschicht 11, Fig. 9b die Herstellung der zweiten Teilschicht 12 und Fig. 9c die Herstellung der dritten Teilschicht 13. Die erste Teilschicht 11 enthält einen ersten Anteil einer Elektrodenpaste 9, die in einem ersten Druckschritt auf ein Substrat aufgetragen wird. Wenn die Elektrodenpaste einen zu hohen Feuchtigkeitsgehalt aufweist, kann ein Trocknungsschritt in einer nicht näher spezifizierten Trocknungsvorrichtung 10 vorgesehen werden. Danach erfolgt ein Pressvorgang, wobei mittels der Pressvorrichtung 2 eine Druckkraft auf die erste Teilschicht 11 aufgebracht wird, sodass ein verdichteter erster Anteil der Elektrodenpaste erhalten wird.

In Fig. 9b ist dargestellt, dass in einem zweiten Druckschritt ein zweiter Anteil der Elektrodenpaste 9 auf den verdichteten ersten Anteil der Elektrodenpaste aufgetragen wird, hier der ersten Teilschicht 11. Anschliessend wird, wiederum nach einem optionalen Trocknungsschritt in einer Trocknungsvorrichtung 10, eine Druckkraft auf den zweiten Anteil der Elektrodenpaste mittels der Pressvorrichtung 2 aufgebracht, um den zweiten Anteil der Elektrodenpaste zu verdichten, sodass ein verdichteter zweiter Anteil der Elektrodenpaste erhalten wird, welcher der zweiten Teilschicht 12 entspricht.

In Fig. 9c ist dargestellt, dass in einem dritten Druckschritt ein dritter Anteil der Elektrodenpaste 9 auf den verdichteten zweiten Anteil der Elektrodenpaste aufgetragen wird, hier der zweiten Teilschicht 12. Anschliessend wird, wiederum nach einem optionalen Trocknungsschritt in einer Trocknungsvorrichtung 10, gegebenenfalls eine Druckkraft auf den dritten Anteil der Elektrodenpaste mittels der Pressvorrichtung 2 aufgebracht, um den dritten Anteil der Elektrodenpaste zu verdichten, sodass ein verdichteter Anteil der Elektrodenpaste erhalten wird, welcher der dritten Teilschicht 12 entspricht.

Für den Fachmann ist offensichtlich, dass viele weitere Varianten zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nicht-ausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C bis N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Verfahren zur Herstellung einer Elektrode (1) für einen Energiespeicher mittels eines Siebdruckverfahrens umfassend mindestens zwei aufeinanderfolgende Druckschritte, wobei in einem ersten Druckschritt ein erster Anteil einer Elektrodenpaste (9) auf ein Substrat (3) aufgetragen wird, wobei anschliessend mittels einer Pressvorrichtung (2) eine Druckkraft auf den ersten Anteil der Elektrodenpaste (9) aufgebracht wird, um den ersten Anteil der Elektrodenpaste zu verdichten, sodass ein verdichteter erster Anteil der Elektrodenpaste als eine erste Teilschicht (11) erhalten wird, wobei in einem zweiten Druckschritt ein zweiter Anteil der Elektrodenpaste auf die erste Teilschicht (11) aufgetragen wird, wobei anschliessend eine Druckkraft auf den zweiten Anteil der Elektrodenpaste aufgebracht wird, um den zweiten Anteil der Elektrodenpaste zu verdichten, sodass ein verdichteter zweiter Anteil der Elektrodenpaste als eine zweite Teilschicht (12) erhalten wird.

2. Verfahren nach Anspruch 1, wobei die Druckkraft zur Herstellung des verdichteten zweiten Anteils der Elektrodenpaste kleiner als die Druckkraft zur Herstellung des verdichteten ersten Anteils der Elektrodenpaste ist.

3. Verfahren nach einem der Ansprüche 1 oder 2, wobei der verdichtete erste Anteil der Elektrodenpaste eine kleinere Porosität aufweist als der verdichtete zweite Anteil der Elektrodenpaste.

4. Verfahren nach einem der vorhergehenden Ansprüche, wobei in einem dritten Druckschritt ein dritter Anteil der Elektrodenpaste (9) auf die zweite Teilschicht (12) aufgetragen wird, wobei anschliessend eine Druckkraft auf den dritten Anteil der Elektrodenpaste aufgebracht wird, um den dritten Anteil der Elektrodenpaste zu verdichten, sodass ein verdichteter dritter Anteil der Elektrodenpaste erhalten als eine dritte Teilschicht (13) wird.

5. Verfahren nach Anspruch 4, wobei der verdichtete zweite Anteil der Elektrodenpaste eine kleinere Porosität aufweist als der verdichtete dritte Anteil der Elektrodenpaste.

6. Verfahren nach einem der vorhergehenden Ansprüche, wobei die Porosität der ersten Teilschicht (11) im Bereich von 10 bis einschliesslich 70 % liegt.

7. Verfahren nach einem der vorhergehenden Ansprüche, wobei nach zumindest einem der Druckschritte eine Trocknung zumindest eines der ersten oder zweiten Anteile der Elektrodenpaste mittels einer Trocknungsvorrichtung (10) erfolgt.

8. Verfahren nach einem der vorhergehenden Ansprüche, die Pressvorrichtung (2) als eine Kalandriervorrichtung ausgebildet ist.

9. Elektrode (1) für einen Energiespeicher, wobei die Elektrode eine Schicht (5) und ein Substrat (3) enthält, wobei die Schicht (3) eine Schichtdicke aufweist, wobei die Schicht eine Porosität aufweist, **dadurch gekennzeichnet, dass** die Porosität über die Schichtdicke variabel ist.

10. Elektrode (1) nach Anspruch 9, wobei die Porosität der Schicht (5) mit zunehmendem Abstand vom Substrat (3) zunimmt.

11. Elektrode (1) nach einem der Ansprüche 9 oder 10, wobei die Schicht (5) eine erste Teilschicht (11) umfasst, die einen ersten Anteil einer Elektrodenpaste (9) enthält und zumindest einen zweite Teilschicht (12), die einen zweiten Anteil einer Elektrodenpaste enthält, wobei die zweite Teilschicht (12) auf der ersten Teilschicht (11) aufgetragen ist, **dadurch gekennzeichnet, dass** die erste Teilschicht (11) eine gemittelte Porosität Y1 aufweist und die zweite Teilschicht (12) eine gemittelte Porosität Y2 aufweist, wobei die gemittelte Porosität Y1 der ersten Teilschicht (11) kleiner als die gemittelte Porosität Y2 der zweiten Teilschicht (12) ist.

12. Energiespeicher, enthaltend zumindest eine Elektrode (1) nach einem der vorhergehenden Ansprüche.
